**Europäisches Patentamt**

**European Patent Office**

**Office européen des brevets**

(19)

(11) Veröffentlichungsnummer: **0 105 108**
**B1**

# (12) EUROPÄISCHE PATENTSCHRIFT

(45) Veröffentlichungstag der Patentschrift:
**07.01.87**

(21) Anmeldenummer: **83107095.8**

(22) Anmeldetag: **20.07.83**

(51) Int. Cl.⁴: **F 02 F 1/04,** F 02 F 11/00,
F 16 J 15/08

(54) **Hubkolbenbrennkraftmaschine.**

(30) Priorität: **30.09.82 DE 3236185**

(43) Veröffentlichungstag der Anmeldung:
**11.04.84 Patentblatt 84/15**

(45) Bekanntmachung des Hinweises auf die Patenterteilung:
**07.01.87 Patentblatt 87/2**

(84) Benannte Vertragsstaaten:
**AT DE FR GB IT**

(56) Entgegenhaltungen:
**EP - A - 0 046 505**
**DE - B - 1 028 386**
**DE - C - 967 418**
**FR - A - 1 066 721**
**FR - A - 2 410 141**

(73) Patentinhaber: **Klöckner-Humboldt-Deutz**
**Aktiengesellschaft,**
**Deutz-Mülheimer-Strasse 111 Postfach 80 05 09,**
**D-5000 Köln 80 (DE)**

(72) Erfinder: **Eckert, Rolf, Dipl.-Ing., Schwerfelstrasse 23,**
**D-5060 Bergisch-Gladbach 3 (DE)**

## Beschreibung

Die Erfindung bezieht sich auf eine Hubkolbenbrennkraftmaschine mit einem zwischen einem Zylinderrohr und einem Leichtmetallzylinderkopf angeordneten Metalldichtring nach dem Oberbegriff des Anspruchs 1.

Dichtflächen von Leichtmetallzylinderköpfen, die mit einem gusseisernen Zylinderrohr verspannt sind, sind aufgrund hoher Flächenpressung und radialer Relativbewegungen von Zylinderkopf und Zylinderrohr infolge eines unterschiedlichen Wärmeausdehnungsverhaltens von Leichtmetall und Gusseisen höchsten Belastungen ausgesetzt, die zur Zerstörung der Dichtflächen und zum Ausfall der Zylindereinheit führen können.

Aus der EP-A-46 505 ist eine Dichtanordnung zwischen dem Zylinderrohr und dem Leichtmetallzylinderkopf bekannt, die aus einem gusseisernen Ringelement besteht, welches die Dichtflächen zwischen Leichtmetallzylinderkopf und dem Zylinderrohr bildet. Zum Brennraum hin ist innenseitig oberhalb der Zylinderrohrinnenhülse ein keramisches Ringelement vorgesehen, um das gusseiserne Ringelement zum Brennraum hin abzuschirmen. In der Praxis hat sich gezeigt, dass oberhalb des Keramikrings eine erhebliche Wärme in das gusseiserne Ringelement einfliessen kann und ungehindert über die Dichtfläche zum Leichtmetallzylinderkopf geführt ist. Ähnliches gilt auch für das Zylinderrohr, so dass im Ergebnis trotz des Keramikrings erhebliche radiale Relativbewegungen aufgrund eines unterschiedlichen Wärmeausdehnungsverhaltens in den Dichtflächen des Leichtmetallzylinderkopfes auftreten und auch Temperaturspannungen im Leichtmetallzylinderkopf in einem nur unzureichenden Rahmen verringert sind. Eine Zerstörung der Dichtflächen des Leichtmetallzylinderkopfes ist daher unvermeidbar.

In der DE-B-10 28 386 ist die Dichtfläche des Leichtmetallzylinderkopfes durch einen eingegossenen Schwermetallring gebildet. Hierdurch werden zwar die radialen Relativbewegungen an der Dichtfläche von Zylinderkopf und Zylinderrohr durch annähernd gleiches Wärmeausdehnungsverhalten des Dichtrings und des Zylinderrohres weitgehend vermieden, jedoch treten erhebliche Temperaturspannungen im Leichtmetallzylinderkopf auf, die Wärmerisse und eine Zerstörung des Zylinderkopfes verursachen können.

Durch die erfindungsgemässe Ausbildung nach Anspruch 1 sind in einfacher Weise Temperaturspannungen im Leichtmetallzylinderkopf vermindert, wobei die Dichtflächen eine hohe Standfestigkeit aufweisen. Das Übermass der zylinderkopfseitigen Ausnehmung gewährleistet, dass Temperaturspannungen aufgrund etwaiger noch vorhandener Relativbewegungen nicht auftreten können. Die Dichtfläche am Zylinderkopf und am Zylinderrohr wird nicht durch ein keramisches Material gebildet, sondern durch einen standfesten Metallring. Dem unterschiedlichen Wärmeausdehnungsverhalten von Metallring und Zylinderkopf wird dadurch entgegengewirkt, dass dieses innenseitig gemeinsam mit dem stirnseitigen Bereich der Zylinderrohrwandung mit einer wärmeisolierenden Schicht verkleidet ist. Da die Verkleidungen von Metallring und Zylinderrohrinnenwand direkt aufeinander aufliegen, ist in diesem kritischen Bereich ein Wärmeübergang vom Brennraum her unterbunden. Dadurch wird einerseits ein Abbau von Temperaturspitzen und andererseits eine Vergleichmässigung der Temperaturen bei Lastwechselbetrieb sowohl im Dichtelement als auch im Leichtmetallzylinderkopf erreicht, so dass die durch unterschiedliche Wärmeausdehnung hervorgerufenen Temperaturspannungen des Zylinders und radiale Relativbewegungen praktisch auszuschliessen sind.

Ferner ist durch die behinderte Wärmeabfuhr die Brennraumtemperatur gesteigert, wodurch die insbesondere im Kaltstart- und Teillastbetrieb erhöhte HC-Emission gesenkt wird und weiterhin der Gesamtwirkungsgrad der Brennkraftmaschine verbessert ist.

Als wärmeisolierende Schicht ist ein keramischer Werkstoff, insbesondere Aluminiumtitanat $Al_2TiO_5$ besonders gut geeignet, wobei in einfacher Ausführung der Dichtring durch Abstechen von einem Verbundrohr mit eingeschrumpfter Keramikhülse hergestellt sein kann.

In Ausgestaltung der Erfindung ist vorgeschlagen, dass die zylinderrohrseitige Auflagefläche der wärmeisolierenden Schicht des Dichtrings und die zylinderkopfseitige Auflagefläche der wärmeisolierenden Schicht des Dichtrings und die zylinderkopfseitige Auflagefläche des im Zylinderrohr vorgesehenen wärmeisolierenden Bauteils den gleichen Querschnitt aufweisen. Hierdurch liegt die wärmeisolierende Schicht des Dichtrings auf einer Fläche mit annähernd gleicher Festigkeit auf.

Durch eine Anfasung der wärmeisolierenden Schicht an der brennraumseitigen Innenfläche wird der Dichtring ein unempfindliches Lagerteil.

Die zeichnerische Darstellung zeigt die Erfindung anhand eines ausgewählten Ausführungsbeispieles. Es zeigen:

Fig. 1 einen Schnitt durch die Verbindungsstelle Zylinderkopf – Zylinderrohr bei einer luftgekühlten Brennkraftmaschine,

Fig. 2 einen Querschnitt des Dichtringes.

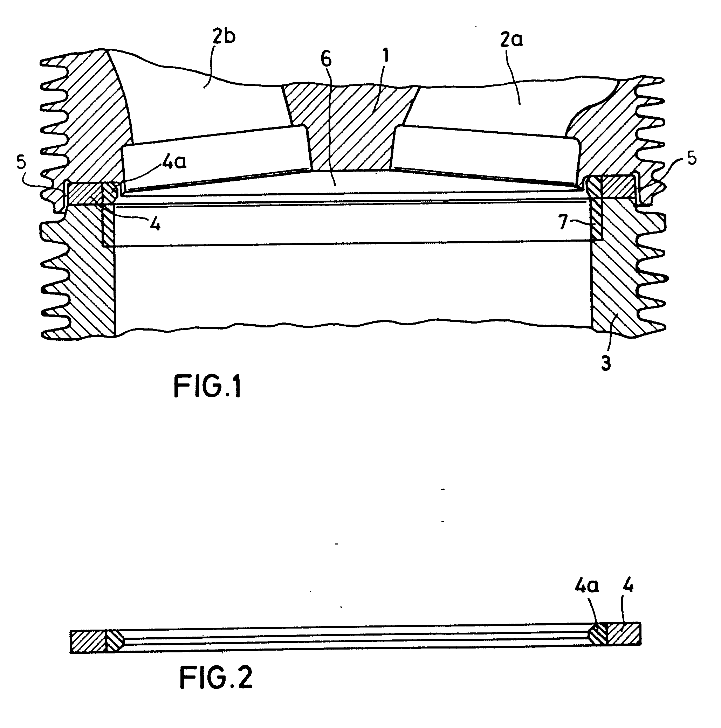

In Fig. 1 ist ausschnittsweise der Zylinder einer luftgekühlten Brennkraftmaschine an der Verbindungsstelle Zylinderkopf – Zylinderrohr dargestellt. Mit 1 ist der mit einem Einlass- und Auslasskanal 2a, 2b versehene Leichtmetallzylinderkopf und mit 3 das Zylinderrohr bezeichnet. Zur Aufnahme des Dichtringes 4 aus Metall weist der Leichtmetallzylinderkopf 1 eine Ausnehmung 5 auf. Zum Brennraum 6 hin ist der Metalldichtring 4 mit einer keramischen wärmeisolierenden Schicht 4a versehen, die symmetrisch angefast ist und an einem keramischen wärmeisolierenden Bauteil 7 aufliegt, das in der stirnseitigen Innenfläche des Zylinderrohres 3 angeordnet ist.

Fig. 2 verdeutlicht in einer geschnittenen Einzeldarstellung den wärmeisolierenden Metalldichtring 4, 4a des erfindungsgemässen Zylinders.

**Patentansprüche**

1. Hubkolbenbrennkraftmaschine mit einem zwischen einem Zylinderrohr (3) und einem Leichtmetallzylinderkopf (1) angeordneten Dichtring (4) aus Metall, wobei der Dichtring (4) eine Dichtfläche zu dem Leichtmetallzylinderkopf (1) und dem Zylinderrohr (3) bildet und wobei an dem dem Leichtmetallzylinderkopf (1) zugewandten Ende des Zylinderrohres (3) ein wärmeisolierendes Bauteil (7) aus Keramik vorgesehen ist, dadurch gekennzeichnet, dass der Metalldichtring (4) in einer im Leichtmetallzylinderkopf (1) vorgesehenen Ausnehmung (5) angeordnet ist, die breiter als der Dichtring ist, dass der Metalldichtring (4) über seine brennraumseitige Fläche mit einer wärmeisolierenden Schicht (4a) verkleidet ist, dass das Bauteil (7) seinerseits in einer Ausnehmung im stirnseitigen Innenbereich des Zylinderrohrs angeordnet ist und bündig mit dem Zylinderkopfseitigen Ende des Zylinderrohrs (3) abschliesst und dass das zylinderrohrseitige Bauteil (7) eine Auflagefläche für die wärmeisolierende Schicht (4a) des Dichtrings (4) bildet.

2. Hubkolbenbrennkraftmaschine nach Anspruch 1, dadurch gekennzeichnet, dass die wärmeisolierende Schicht (4a) aus einem keramischen Werkstoff, insbesondere Aluminiumtitanat ($Al_2TiO_5$), besteht.

3. Hubkolbenbrennkraftmaschine nach Anspruch 1 oder 2, dadurch gekennzeichnet, dass die zylinderrohrseitige Auflagefläche der wärmeisolierenden Schicht (4a) und die zylinderkopfseitige Auflagefläche des wärmeisolierenden Bauteils (7) den gleichen Querschnitt aufweisen.

4. Hubkolbenbrennkraftmaschine nach einem der Ansprüche 1 bis 3, dadurch gekennzeichnet, dass die wärmeisolierende Schicht (4a) an der brennraumseitigen Innenfläche mit einer Anfasung versehen ist.

**Revendications**

1. Moteur à combustion interne à piston à mouvement alternatif comportant une bague d'étanchéité (4) en métal disposée entre un cylindre tubulaire (3) et une culasse en métal léger (1), étant précisé que la bague d'étanchéité (4) forme une surface d'étanchéité en direction de la culasse en métal léger (1) et du cylindre tubulaire (3) et étant précisé qu'à l'extrémité, côté culasse en métal léger (1), du cylindre tubulaire (3) est prévu un composant (7) céramique thermiquement isolant, caractérisé en ce que la bague d'étanchéité métallique (4) est disposée dans un évidement (5) qui est prévu dans la culasse en métal léger (1) et qui est plus large que la bague d'étanchéité; en ce que la bague d'étanchéité métallique (4) est revêtue, sur sa surface côté chambre de combustion, d'une couche thermiquement isolante (4a); en ce que le composant (7), de son côté, est disposé dans un évidement prévu dans la zone intérieure frontale du cylindre tubulaire et vient se raccorder bien affleurant avec une extrémité, côté culasse, du cylindre tubulaire (3); et en ce que le composant, côté cylindre tubulaire, forme une surface d'appui pour la couche thermiquement isolante (4a) de la bague d'étanchéité (4).

2. Moteur à combustion interne à piston à mouvement alternatif selon la revendication 1, caractérisé en ce que la couche thermiquement isolante (4a) est constituée d'un matériau céramique, en particulier de titanate d'aluminium ($Al_2TiO_5$).

3. Moteur à combustion interne à piston à mouvement alternatif selon la revendication 1 ou la revendication 2, caractérisé en ce que la surface d'appui, côté cylindre tubulaire, de la couche thermiquement isolante (4a) et la surface d'appui, côté culasse, du composant thermiquement isolant (7) présentent la même section.

4. Moteur à combustion interne à piston à mouvement alternatif selon l'une des revendications 1 à 3, caractérisé en ce que la couche thermiquement isolante (4a) présente, à sa surface intérieure côté chambre de combustion, un chanfrein.

**Claims**

1. A reciprocating-piston internal combustion engine including a metal gasket (4) disposed between a cylinder (3) and a respective light-metal cylinder head (1), in which the gasket (4) constitutes a sealing surface for both the light-metal cylinder head (1) and the cylinder (3), and in which the cylinder's (3) end face facing the cylinder head (1) is provided with a heat-insulating ceramic component (7), characterized in that the metal gasket (4) is arranged in a recess (5) of the cylinder head (1), that the width of the recess exceeds that of the gasket (4) the surface of which facing the combustion chamber is coated with a layer (4a) of a heat-insulating material, that the ceramic component (7) is arranged in a recess provided in the internal wall of the cylinder's top end portion and terminates flush with the cylinder's (3) end face facing the cylinder head, and in that the component (7) located in the cylinder provides a seating for the heat-insulating layer (4a) of the gasket (4).

2. A reciprocating-piston internal combustion engine according to claim 1, characterized in that the heat-insulating material of the layer (4a) is a ceramic one, preferably aluminium titanate ($Al_2TiO_5$).

3. A reciprocating-piston internal combustion engine according to claim 1 or claim 2, characterized in that the cross-section of the insulating layer's (4a) surface facing the cylinder and being supported on the seating is the same as that of the heat-insulating component's (7) seating facing the cylinder head.

4. A reciprocating-piston internal combustion engine according to any of the claims 1 to 3, characterized in that the insulating layer's (4) inner face facing the combustion chamber is chamfered.

FIG.1

FIG.2